# EUROPÄISCHE PATENTANMELDUNG

(11) **EP 1 586 839 A2**
(43) Veröffentlichungstag der Anmeldung: **19.10.2005**
(21) Anmeldenummer: 05101688.9
(22) Anmeldetag: 04.03.2005
(51) Int. Cl.: F26B 13/10

(54) **Dichtungsanordnung, insbesondere für eine Trockenanordnung**

(30) Priorität: 13.04.2004 DE 102004017827
(71) Anmelder: Voith Paper Patent GmbH, 89522 Heidenheim (DE)
(72) Erfinder: Haase, Christoph, 3041, Asperhofen (AT)

(57) **Zusammenfassung**

Eine Dichtungsanordnung zum Abdichten eines ersten, ein unter Druck stehendes Medium enthaltenden Bauelements (1) durch ein Dichtelement (5) gegenüber einem relativ zu dem ersten Bauelement (1) bewegten zweiten Bauelement (2), ist dadurch gekennzeichnet, dass das Dichtelement (5) in einem gemeinsam mit dem Dichtelement (5) verschleißbaren Dichtungshalter (4) eingebracht ist.

## Beschreibung

Die Erfindung betrifft eine Dichtungsanordnung zum Abdichten eines ersten, ein unter Druck stehendes Medium enthaltenden Bauelements durch ein Dichtelement gegenüber einem relativ zu dem ersten Bauelement bewegten zweiten Bauelement.

Schleifende Dichtungen, die einen bewegten Körper gegen einen unbewegten Körper abdichten oder umgekehrt den unbewegten Körper gegen den bewegten Körper abdichten, verschleißen aufgrund der zwischen den beiden Körpern bestehenden Gleitreibung. Somit müssen die Dichtungen gelegentlich gewechselt werden.

Sehr weiche, schleifende Kupplungen, beispielsweise Dichtleisten in Form von Stopfbuchspackungen, müssen von einem Dichtleistenhalter seitlich so weit umfasst werden, dass sie nicht durch den Dichtspalt zwischen den beiden Bauelementen hindurch extrudieren, d. h. herausgezogen oder herausgerissen und auf diese Weise schnell verschlissen werden. In der Regel hat der Dichtspalt zwischen dem in dem ersten Bauelement integrierten Dichtleistenhalter und der von dem zweiten Bauelement gebildeten bewegten Oberfläche eine Höhe zwischen 0,2 mm und 2 mm. Dieser Dichtspalt stellt gleichzeitig auch den Verschleißweg der Dichtung dar, der zur Verfügung steht, bis diese ausgetauscht werden muss.

Härtere, stärker formstabile Dichtleisten müssen nicht so weit umfasst werden; sie können daher innerhalb des Dichtleistenhalters eine größere Höhe haben und stellen daher einen längeren Verschleißweg zur Verfügung. Allerdings sind diese härteren Dichtleisten nicht für alle Reibpaarungen geeignet. Wenn beispielsweise die abzudichtende Oberfläche aus einem Kunststoff, etwa PTFE (Polytetrafluorethylen) oder PUR (Polyurethan) besteht, muss die Dichtung aus einem weicheren Material bestehen, das einen niedrigeren Reibbeiwert hat. Eine derartige Dichtung kann jedoch nur eine geringe Beständigkeit gegen Verschleiß haben. Oft haben aber auch härtere Dichtungen niedrige Anwendungsgrenzen, die beispielsweise durch einen niedrigen Druck, den sie aushalten, und/oder durch eine niedrige, aufgrund der Dichtung zwischen dem ersten und dem zweiten Bauelement zulässige Relativgeschwindigkeit festgelegt werden. Der Belastungsgrenzwert lässt sich als Produkt eines Druck- und eines Geschwindigkeits-Grenzwertes (p x v - Grenzwert) angeben.

Es ist die Aufgabe der Erfindung, eine Dichtungsanordnung zu schaffen, die eine gute Abdichtung zwischen zwei Bauelementen herstellt.

Erfindungsgemäß wird diese Aufgabe bei einer Dichtungsanordnung der eingangs genannten Art dadurch gelöst, dass das Dichtelement in einem gemeinsam mit dem Dichtelement verschleißbaren Dichtungshalter eingebracht ist.

Die Erfindung hat den Vorteil, dass das Material des Dichtleistenhalters durch den Dichtungsvorgang formstabil bleibt, aber weicher ist als die zu dichtende Oberfläche. Somit verschleißt die Dichtung gemeinsam mit dem Dichtleistenhalter.

Vorteilhafte Weiterbildungen der Erfindung ergeben sich aus den Unteransprüchen, der Beschreibung und den Zeichnungen.

In einer Ausgestaltung der Erfindung ist vorgesehen, dass der Dichtungshalter das Dichtelement an seinen Längsseiten und an seiner von dem zweiten Bauelement abgewandten Seite umgibt.

Vorzugsweise wird das Dichtelement in Form einer Stopfbuchspackung ausgebildet. Die abzudichtende Oberfläche besteht beispielsweise aus Metall oder aus Kunststoff (PTFE, PUR).

In einer weiteren vorteilhaften Ausbildung der Erfindung ist vorgesehen, dass der Dichtungshalter aus einer Gummi-Graphit-Mischung besteht.

Es ist vorteilhaft, wenn der Dichtungshalter in einer von dem ersten Bauelement aufgenommenen Führung gehalten wird.

Mit Vorteil wird der Dichtungshalter durch ein Anpressmittel in der Führung gehalten. Das Anpressmittel ist entweder eine Feder oder ein pneumatisches oder hydraulisches Fluid. Durch die Einstellung der Federkraft bzw. durch die Anpassung des Drucks des in einem Druckzylinder enthaltenen Fluids lässt sich die Anpressung der von dem Dichtleistenhalter gehaltenen Dichtung an die Oberfläche einstellen und kontinuierlich nachstellen.

Insgesamt bestehen die Vorteile der erfindungsgemäßen Anordnung in einer einfachen, kostengünstigen Konstruktion mit einem hohen Verschleißweg und einer langen Lebensdauer. Bei der Erfindung können sehr weiche Dichtungswerkstoffe zum Einsatz kommen, die günstigere Verschleißeigenschaften aufweisen als herkömmliche Dichtungselemente. Dadurch lassen sich höhere Druck-Geschwindigkeits-Grenzwerte (p x v - Grenzwerte) erreichen.

Die Erfindung bezieht sich auch auf eine Verwendung einer oben beschriebenen Dichtungsanordnung in einer Trockenanordnung mit einem beheizten Zylinder zur Aufheizung einer Papier-, Karton-, Tissue- oder einer anderen Faserstoffbahn in einer Maschine zur Herstellung und/oder Veredlung der Faserstoffbahn, wobei oberhalb des Zylinders ein wenigstens teilweise auf dem Zylinder abgestütztes Maschinenelement, insbesondere eine Druckhaube, angeordnet ist. Dabei ist das Maschinenelement das erste Bauelement, und der Zylinder ist das zweite Bauelement.

Nachfolgend wird die Erfindung an einem Ausführungsbeispiel näher erläutert. In den beigefügten Zeichnungen zeigen:
- Figur: 1: eine Schnittansicht eines Ausschnitts aus zwei aneinandergrenzenden Bauelementen 1, 2 mit einer Dichtungsanordnung 8, 9 und

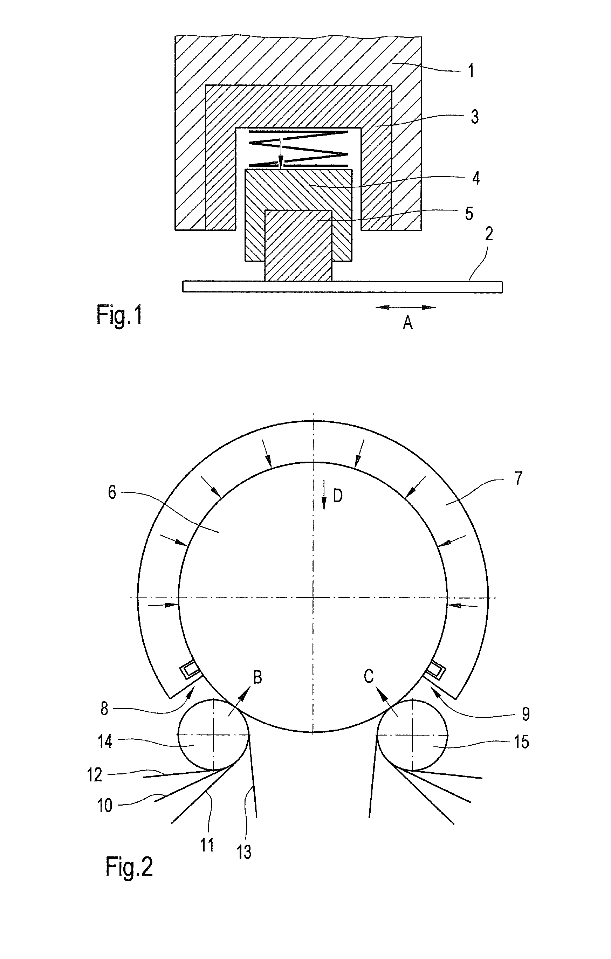

- Figur 2:: eine schematische Ansicht einer auf einen Trockenzylinder 6 aufgesetzten Druckhaube 7, in der Dichtungsanordnungen 8, 9 integriert sind.

Eine Dichtungsanordnung dichtet ein Bauelement 1 beispielsweise in Form einer Dichthaube 7 (Fig. 1) gegen ein Bauelement 2 z. B. in Form eines rotierenden Trockenzylinders 6 ab, das sich in Richtung eines Doppelpfeils A gegenüber dem Bauelement 1 bewegen lässt. Das Bauelement 1 enthält in seinem Inneren eine Führung 3, in der ein Dichtleistenhalter 4 beweglich gegenüber der Oberfläche des Bauelements 2 anpressbar gelagert ist.

Der Dichtleistenhalter 4 umfasst ein Dichtelement 5. Der Dichtleistenhalter 4 besteht beispielsweise aus einer Gummi-Graphit-Mischung, während das Dichtelement 5 von einer Stopfbuchspackung gebildet wird. Zusammen mit dem Dichtleistenhalter 4 wird das Dichtelement 5 durch die elastische Anpressung entsprechend dem Verschleiß des Dichtelements 5 kontinuierlich nachgeführt, so dass es immer mit dem gewünschten Anpressdruck gegen die bewegte Oberfläche des Bauelements 2 drückt.

Die oben beschriebene Dichtungsanordnung lässt sich beispielsweise an einer auf einen Zylinder 6 aufgesetzten Druckhaube 7 (Fig. 2) in Form von der Mantelfläche des Zylinders 6 zugewandten Dichtungsanordnungen 8, 9 einsetzen, die parallel zur Längsachse des Zylinders 6 verlaufen. Eine weitere erfindungsgemäße Dichtungsanordnung ist jeweils an den stirnseitigen Kanten (hier nicht dargestellt) der Druckhaube 7 gegenüber dem Zylinder 6 angebracht.

Über den Trockenzylinder 6 wird zusammen mit Sieben 10, 11 unter einem dichten und für Feuchtigkeit undurchlässigen Band 12 eine Faserstoffbahn 13 geführt. Unterhalb des Zylinders 6 sind jeweils unter gleichem Abstand zur senkrechten Mittelachse des Zylinders 6 zwei Stützwalzen 14, 15 angebracht, die den Zylinder 6 in Richtung von Pfeilen B, C gegen die in Richtung eines Pfeils D wirkende Gewichtskraft der Druckhaube 7 abstützen. Die Stützwalzen 14, 15 haben zudem eine Führungsfunktion für die Bahn 13, die Siebe 10, 11 und das Band 12, indem diese um die Stützwalzen 14, 15 herumgeführt werden.

Die seitlich angebrachten Dichtungsanordnungen 8, 9 dichten das Innere der Druckhaube 7 gegen das undurchlässige Band 12 ab, das die darunterliegenden Siebe 10, 11 und die Faserstoffbahn 13 abschirmt. Wenn die Anpresskraft, mit der die Stützwalzen 14, 15 gegen den Trockenzylinder 6 drücken, veränderbar ist, beispielsweise durch eine auf die Lager der Stützwalzen 14, 15 wirkende Betätigung durch hydraulische Zylinder, lässt sich auch die Pressung des von den Dichtungsanordnungen 8, 9 gebildeten Dichtsystems gegenüber dem Band 12 verändern und einstellen.

Während der beheizte Trockenzylinder 6 die Faserstoffbahn 13 aufheizt, wird das undurchlässige Band 12 von der Druckhaube 7 gekühlt. Im Ergebnis kommt es zum Verdampfen von Flüssigkeit der Faserstoffbahn 13 und zur Kondensation in den Sieben 10, 11.

## Patentansprüche

1. Dichtungsanordnung (8, 9) zum Abdichten eines ersten, ein unter Druck stehendes Medium enthaltenden Bauelements (1) durch ein Dichtelement (5) gegenüber einem relativ zu dem ersten Bauelement (1) bewegten zweiten Bauelement (2),
**dadurch gekennzeichnet,**
**dass** das Dichtelement (5) in einem gemeinsam mit dem Dichtelement (5) verschleißbaren Dichtungshalter (4) eingebracht ist.

2. Dichtungsanordnung (8, 9) nach Anspruch 1,
**dadurch gekennzeichnet,**
**dass** der Dichtungshalter (4) das Dichtelement (5) an seinen Längsseiten und/oder an seiner von dem zweiten Bauelement (2) abgewandten Seite umgibt.

3. Dichtungsanordnung (8, 9) nach Anspruch 1 oder 2,
**dadurch gekennzeichnet,**
**dass** das Dichtelement (5) eine Stopfbuchspackung ist.

4. Dichtungsanordnung (8, 9) nach Anspruch 2 oder 3,
**dadurch gekennzeichnet,**
**dass** der Dichtungshalter (4) aus einer Gummi-Graphit-Mischung besteht.

5. Dichtungsanordnung (8, 9) nach einem der Ansprüche 2 bis 4,
**dadurch gekennzeichnet,**
**dass** der Dichtungshalter (4) in einer von dem ersten Bauelement (1) aufgenommenen Führung (3) gehalten wird.

6. Dichtungsanordnung (8, 9) nach Anspruch 5,
**dadurch gekennzeichnet,**
**dass** der Dichtungshalter (4) durch ein Anpressmittel in der Führung gehalten wird, wobei der Anpressdruck des Anpressmittels vorzugsweise entsprechend dem Verschleiß des Dichtelements (5) und des Dichtungshalters (4) nachstellbar ist.

7. Verwendung einer Dichtungsanordnung (8, 9) (8, 9) nach einem der Ansprüche 1 bis 6 in einer Trockenanordnung mit einem beheizten Zylinder (6) zur Aufheizung einer Papier-, Karton-, Tissue- oder einer anderen Faserstoffbahn (13) in einer Maschine zur Herstellung und/oder Veredlung der Faserstoffbahn (13), oberhalb dessen ein wenigstens teilweise auf dem Zylinder (6) abgestütztes Maschinenelement, insbesondere eine Druckhaube (7), angeordnet ist, wobei das Maschinenelement das erste Bauelement (1) und der Zylinder (6) das zweite Bauelement (2) ist.
